# EUROPEAN PATENT APPLICATION

(11) **EP 1 974 874 A1**
(43) Date of publication of application: **01.10.2008**
(21) Application number: 08002391.4
(22) Date of filing: 08.02.2008
(51) Int. Cl.: B25J 19/00, B25J 9/04

(54) **Robot having working tool**

(30) Priority: 27.03.2007 JP 2007081064
(71) Applicant: FANUC LTD, Minamitsuru-gun, Yamanashi 401-0597 (JP)
(72) Inventor: Inoue, Toshihiko, Minamitsuru-gun Yamanashi 401-0597 (JP); Nakayama, Kazutaka, Minamitsuru-gun Yamanashi 401-0597 (JP); Iwayama, Takatoshi, Minamitsuru-gun Yamanashi 401-0597 (JP)
(74) Representative: Thum, Bernhard

(57) **Abstract**

In an umbilical member processing mechanism of a robot, a working tool managing unit umbilical member (50) for supplying at least one of the power, the signal and the material to a working tool managing unit (34), is guided from a rotary barrel in the longitudinal direction of an upper arm on a side face of the upper arm (14) located on the opposite side to the side attached to the rotary barrel (12) and then guided onto a front side (18b) of a front arm (18). Next, the working tool managing unit umbilical member (50) is connected to the working tool managing unit (34) through a side of the front arm located on the opposite side to the side on which the upper arm is attached. Further, the working tool managing unit umbilical member is connected to the working tool managing unit being relayed by an umbilical member junction portion (39) attached to a side or a front side of the front arm. Due to the foregoing, even in an arm posture in which a front arm rear portion having the working tool managing unit passes through inside the upper arm, the umbilical member or the working tool managing unit does not interfere with the upper arm.

## Description

### BACKGROUND OF THE INVENTION

### 1. Field of the Invention

The present invention relates to an umbilical member processing mechanism for processing an umbilical member of a robot. More specifically, the present invention relates to an umbilical member processing mechanism for processing an umbilical member of an industrial robot having a working tool.

### 2. Description of the Related Art

Recently, a robot in which an umbilical member extending from a working tool, for example, a cable, tube and hose can be incorporated into a front arm of the robot, has been developed. In this robot, a working tool managing unit is arranged at the front arm rear portion and an umbilical member extending from the working tool is connected to the working tool managing unit through a front arm hollow portion. In order to reduce the interference radius of the front arm rear portion as much as possible, the working tool managing unit is mounted close to an exit of the front arm hollow portion. Concerning this matter, for example, refer to Japanese Unexamined Patent Publication No. 2003-136462 and Japanese Registered Patent Publication No. 3483862.

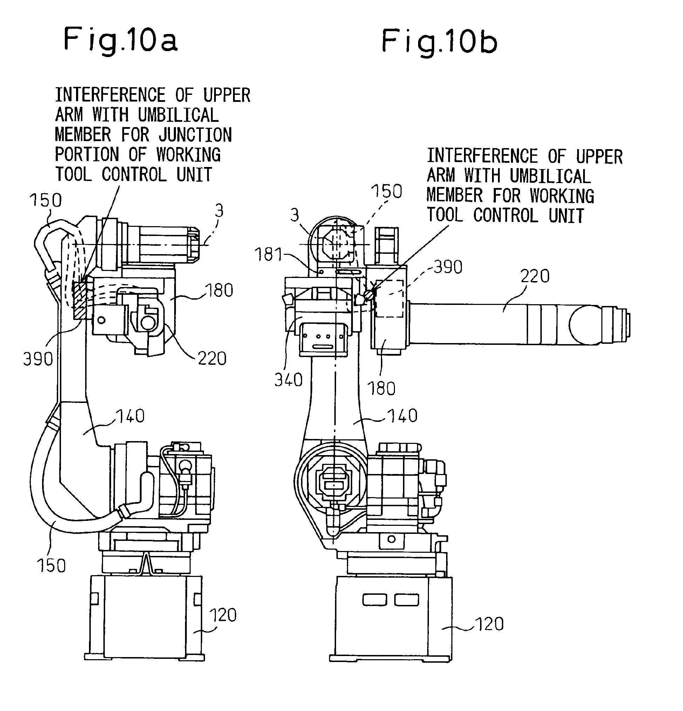

Figs. 10a and 10b are respectively a partial front view and a partial side view of an industrial arc welding robot of the prior art. In these drawings, the upper arm 140 is extended from the rotary barrel 120. The front arm 180 of the robot is attached to a forward end portion of the upper arm 140 by the cantilever type structure so that the front arm 180 can be rotated round the third axis 3. The working tool managing unit 340 of the robot is mounted on the front arm rear portion 181 at the center of the front arm 180. Onto the front side of the front arm 180, the first wrist element 220 is attached.

The umbilical member 150 is extended from a top portion of the rotary barrel 120 along an outside face of the upper arm 140 and connected to the working tool managing unit 340 through the umbilical member junction portion 390 attached to the side face of the front arm 180. In other words, the upper arm 140 and the umbilical member junction portion 390 are attached onto the same side face of the front arm 180. Although not shown in the drawing, the umbilical member for the working tool is extended from the working tool managing unit 340 to the working tool (not shown).

As shown in these drawings, in this robot, it is assumed that a posture of the arm is the front arm rear portion 181 having the working tool managing unit 340 rotates round the third axis 3 and passes inside the upper arm 140. In this case, the following problems may be encountered. As shown in Figs. 10a and 10b, the umbilical member 150 extending from the umbilical member junction portion 390 and/or the working tool managing unit 340 arranged at the front arm rear portion 181 interferes with the upper arm 140. Therefore, in the prior art, the range in which the front arm 180 can move is limited. Accordingly, there is a tendency that an application range of the robot becomes limited.

The present invention has been accomplished in view of the above circumstances. An object of the present invention is to provide an industrial robot in which an umbilical member and/or a working tool managing unit does not interfere with an upper arm even in the case of an arm posture in which a front arm rear portion having a working tool managing unit passes inside the upper arm.

### SUMMARY OF THE INVENTION

In order to accomplish the above object, the first aspect provides a robot comprising: a base portion; a rotary barrel attached to the base portion so that the rotary barrel can be rotated round a first axis; an upper arm attached to the rotary barrel so that the upper arm can be rotated round a second axis perpendicular to the first axis; a front arm having a hollow portion and attached to a forward end portion of the upper arm so that the front arm can be rotated round a third axis parallel with the second axis; a first wrist element attached to a forward end portion of the front arm so that the first wrist element can be rotated round a fourth axis perpendicular to the third axis; a working tool arranged in the front of the first wrist element; and a working tool managing unit arranged in a rear portion of the front arm, wherein a first umbilical member for supplying at least one of the electric power, the signal and the material to the working tool is extended from the working tool managing unit to the working tool through the hollow portion of the front arm, a second umbilical member for supplying at least one of the electric power, the signal and the material to the working tool managing unit is guided in the longitudinal direction of the upper arm from the rotary barrel on a side face of the upper arm located on the opposite side to the side face attached to the rotary barrel and then guided on a front face of the front arm and next connected to the working tool managing unit after it has passed through a side face of the front arm located on the opposite side to the side face on which the upper arm is attached, and the second umbilical member is connected to the working tool control unit being relayed by an umbilical member junction portion attached to the side or the front face of the front arm.

In the first aspect, the umbilical member junction portion is attached on the side face of the front arm located on the opposite side to the upper arm or attached on the front face of the front arm. Therefore, even in the case where the front arm is rotated until a relative angle formed between the front arm and the upper arm is reduced to 0° and even in the case where the front arm is rotated until the relative angle is increased to a value exceeding 180°, the second umbilical member and/or the working tool managing unit does not interfere with the upper arm.

In other words, even in a case in which a posture of the arm in which the front arm rear portion having the working tool managing unit passes inside the upper arm, it is possible to prevent the second umbilical member and/or the working tool managing unit from interfering with the upper arm. Further, since range of the front arm is greatly extended, in the case where the robot is hung from a ceiling, a single robot can handle a large working area which cannot be handled by a conventional robot.

Since the umbilical member junction portion is attached to the side face of the front arm or the front face, even in a case in which a posture of the arm in which the front arm rear portion having the working tool managing unit passes inside the upper arm, the second umbilical member can be easily replaced.

According to the second aspect, a robot according to the first aspect wherein a second wrist element arranged so that the second wrist element can be rotated around a fifth axis perpendicular to the fourth axis; and a third wrist element arranged so that the third wrist element can be rotated round a sixth axis perpendicular to the fifth axis are located between the first wrist element and the working tool, wherein an umbilical member for motors for supplying at least one of the electric power and the signal to the motor to drive the first, the second and the third wrist element is extended from the rotary barrel to the front arm along the second umbilical member and directly connected to each of the motors.

In other words, in the second aspect, even in the case of a posture of the arm in which the front arm rear portion having the working tool managing unit passes inside the upper arm, it is possible to prevent the umbilical member for a motor and/or the working tool managing unit from interfering with the upper arm. Further, in this case, the umbilical member for a motor can be easily assembled on the robot.

According to the third aspect, as in the first or the second aspect, a recess portion is formed on the front face of the front arm and the second umbilical member is guided in the recess portion.

In other words, in the third aspect, the second umbilical member can be stably guided. Further, in the case where the front arm approaches a working space of the robot, it is possible to prevent the second umbilical member from interfering with a peripheral device.

According to the fourth aspect, a robot according to the third aspect further comprises a cover portion for covering the second umbilical member guided in the recess portion.

In other words, in the fourth aspect, the second umbilical member can be protected by the cover portion.

Further, in the case where the front arm approaches a working space of the robot, it is possible to prevent the second umbilical member from interfering with a peripheral device. In this connection, it is preferable that the cover portion is fitted in a recess portion.

According to the fifth aspect, a robot according to one of the first to the fourth aspect further comprises a fixing means for fixing the second umbilical member on each of the upper side face of the upper arm and the front face of the front arm.

In other words, in the fifth aspect, while a movable portion of the umbilical member between the upper arm and the front arm, is being minimized, the umbilical member can be easily assembled to the upper arm and the front arm. At the same time, the front arm can be rotated in a wider range with respect to the upper arm. In this connection, the second umbilical member may be fixed all over the length of the upper arm.

According to the sixth aspect, as in one of the first to the fifth aspect, the upper arm includes a curved portion which is curved outside between the first attaching portion with respect to the rotary barrel and the second attaching portion with respect to the front arm.

In other words, in the sixth aspect, even in the case of a posture of the arm in which the front arm rear portion passes inside the upper arm, it is possible to prevent the second umbilical member, the umbilical member for a motor or the working tool managing unit from interfering with the upper arm.

From the detailed explanations of the typical embodiment of the present invention shown in the accompanying drawings, an object, characteristic and advantage of the present invention and another object, characteristic and advantage of the present invention will become more clear.

### BRIEF DESCRIPTION OF THE DRAWINGS

Fig. 1a is a front view showing an overall arrangement of an industrial arc welding robot having an umbilical member processing mechanism of the present invention.
Fig. 1b is a right side view showing an industrial arc welding robot shown in Fig. 1a.
Fig. 2a is an upper face view showing a structure in the periphery of a front arm.
Fig. 2b is a side view showing a structure in the periphery of a front arm.
Fig. 2c is a front view showing a structure in the periphery of a front arm.
Fig. 3 is a view showing a sectional structure of a torch cable.
Fig. 4a is a front view showing an overall arrangement of an industrial handling robot having an umbilical member processing mechanism of the present invention.
Fig. 4b is a right side view showing an industrial handling robot shown in Fig. 4a.
Fig. 5a is a view showing a posture I of the arm in which the relative angle between the front arm and the upper arm of a robot of the present invention is 0°.
Fig. 5b is a view showing a posture II of the arm in which the relative angle between the front arm and the upper arm is 90°.
Fig. 5c is a view showing a posture III of the arm in which the relative angle between the front arm and the upper arm is 180°.
Fig. 5d is a view showing a posture IV of the arm in which the relative angle between the front arm and the upper arm is 270°.
Fig. 6a is a front view showing a posture IV in detail shown in Fig. 5d.
Fig. 6b is a right side view showing a posture IV in detail shown in Fig. 5d.
Fig. 7 is an enlarged view showing a working tool managing unit enlarged.
Fig. 8a is a front view showing an overall arrangement of an industrial arc welding robot which is hung from a ceiling.
Fig. 8b is a right side view of the arc welding robot shown in Fig. 8a.
Fig. 8c is another front view showing an overall arrangement of an industrial arc welding robot which is hung from a ceiling.
Fig. 8d is a right side view of the arc welding robot shown in Fig. 8c.
Fig. 9a is an upper face view showing another structure of the periphery of the front arm.
Fig. 9b is a side view showing another structure of the periphery of the front arm.
Fig. 9c is a front view showing another structure of the periphery of the front arm.
Fig. l0a is a partial front view showing an industrial arc welding robot of the prior art.
Fig. 10b is a partial side view showing an industrial arc welding robot of the prior art.

### DETAILED DESCRIPTION

Referring to the accompanying drawings, an embodiment of the present invention will be explained below. Like reference characters are used to indicated like components in the following drawings. In order to facilitate understanding, the scale used in these drawings has been appropriately changed.

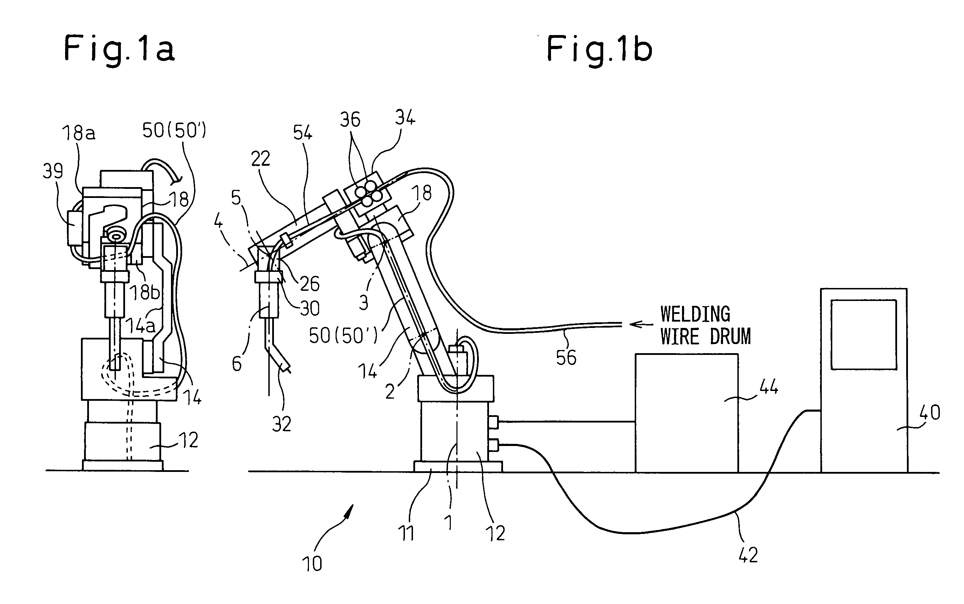

Fig. 1a is a front view showing an overall arrangement of an industrial arc welding robot having an umbilical member processing mechanism of the present invention. Fig. 1b is a right side view showing an industrial arc welding robot shown in Fig. 1a. In these drawings, a welding torch is used as the working tool.

As shown in these drawings, the robot 10 includes: a base portion 11; and a rotary barrel 12 attached to the base portion 11 wherein the rotary barrel 12 is capable of rotating round the first axis 1. The upper arm 14 capable of rotating round the second axis 2 perpendicular to the first axis 1 is attached to an upper arm attaching portion of the rotary barrel 12. As can be seen from Fig. 1a, the upper arm 14 has a C-shaped curved portion 14a, which is curved outside, between the front arm 18 and the rotary barrel 12. The front arm 18 capable of rotating around the third axis 3 parallel with the second axis 2 is attached to a forward end portion of the upper arm 14.

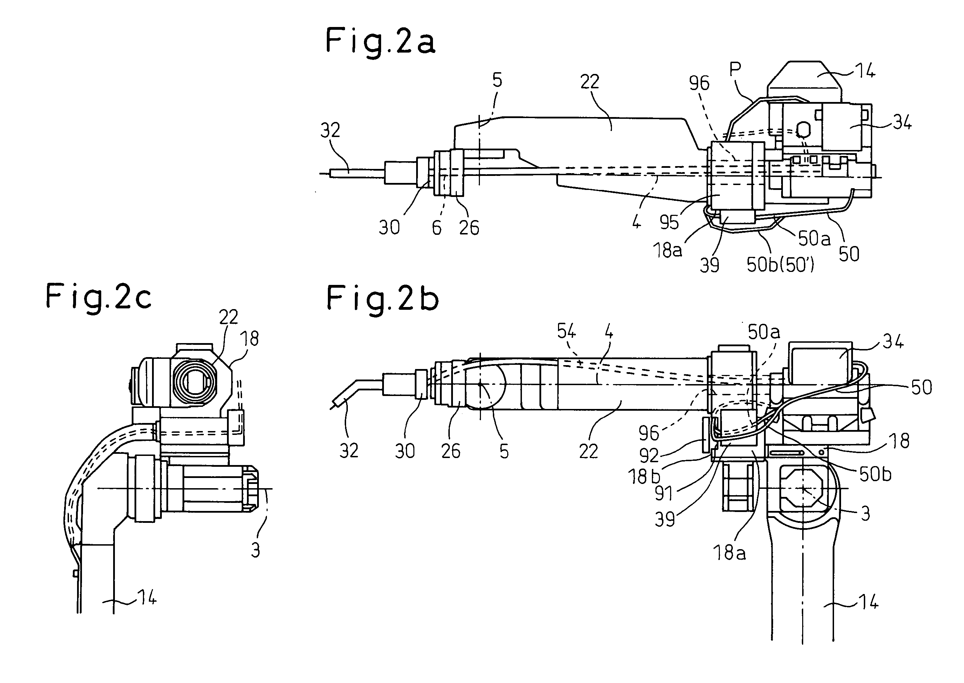

Fig. 2a to Fig. 2c are an upper face view, a side view and a front view showing a structure in the periphery of a front arm, respectively. As shown in Fig. 2a, the first wrist element 22 capable of rotating around the fourth axis 4 perpendicular to the third axis 3 is attached to a forward end portion of the front arm 18. The front arm 18 includes a gear structure portion 95 in which the hollow portion 96 is formed. As it is known, the gear structure portion 95 functions as reduction gears.

As shown in Figs. 2a to 2c, the second wrist element 26 capable of rotating around the fifth axis substantially perpendicular to the fourth axis 4 is connected to a forward end portion of the first wrist element 22. The third wrist element 30 capable of rotating around the sixth axis substantially agreeing with the longitudinal direction of the second wrist element 26 is connected to a forward end portion of the second wrist element 26. The welding torch 32, which is a working tool, is provided at a forward end portion of the third wrist element 30.

As can be seen from Fig. 1b, etc., the front arm 18 is a substantially L-shaped member when it is viewed in the direction of the third axis 3. In the rear portion of the front arm 18, a wire feeding device 34 for feeding a welding wire 56, which extends from a welding wire drum to the welding torch 32 is arranged. The wire feeding device 34 is mounted on the robot in the fourth axis 4 closely to the front arm hollow portion 96. In this connection, the wire feeding device 34 is referred to as a working tool managing unit together with the electromagnetic valve box 134 described later.

The wire feeding device 34 includes a drive roller 36 and a driven roller. The drive roller 36 is driven by a motor (not shown) for the wire feeding device while at least one or more pairs of rollers are pinching the welding wire. Due to the foregoing, the welding wire can be fed out.

The robot control unit 40 shown in Fig. 1 operates as follows. The robot control unit 40 sends a command to the robot 10 through the robot control cable 42 and controls servo motors (not shown) attached to each of the drive portions of 6 axes of the robot 10 and changes a position and a posture of the welding torch 32 so that a predetermined component can be welded.

A power cable in which a welding current flows, an assist gas tube for supplying assist gas and a liner for supplying a welding wire are connected to the welding torch 32. According to the welding position, the robot 10 appropriately changes a posture of the front arm 18, etc., and executes a welding work while a position and posture of the welding torch 32 are being controlled. A water-cooled tube for cooling the welding torch 32 can be connected to the welding torch 32 in some cases.

An umbilical member connecting the welding torch 32 with the wire feeding device 34 will be referred to as a torch cable 54 (umbilical member for a working tool) hereinafter. The torch cable 54, which has passed through the hollow portion 96 of the front arm 18, is connected to the front arm hollow portion 96 of the wire feeding device 34 by a connector, etc. (not shown).

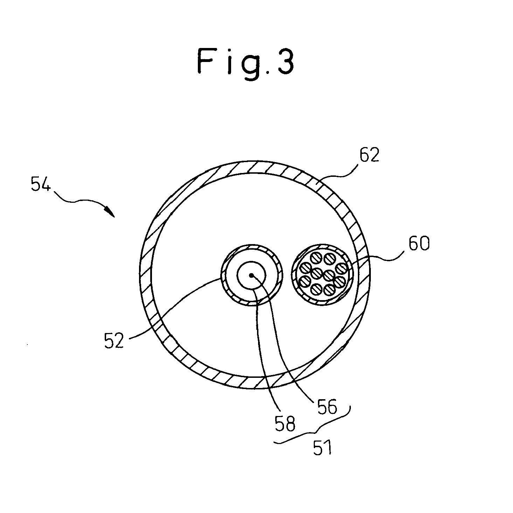

Fig. 3 is a view showing a sectional structure of the torch cable 54. As shown in Fig. 3, the welding wire 56, the assist gas tube 52 and the liner 58 are concentrically passed at the substantial center of the conduit 62 of the torch cable 54. The power cable 60 of multiple cores for supplying a welding current is offset from the center of the conduit 62 by a predetermined distance.

In the case of the torch cable 54 shown in Fig. 3, the length of the assist gas tube 52 is somewhat shorter than that of the other umbilical member. Due to the foregoing, the umbilical member is not given a force of bending and twisting before the conduit tube 62. Therefore, the conduit 62 does not give tensile force or twisting force directly to the umbilical member. Accordingly, the life of the umbilical member can be extended.

For the same reason, the power cable 60 is not given a tensile force. A diameter of each wire of the multiple core power cable 60 is so small that the entire length of the power cable 60 can absorb twist. In this connection, the power cable 60 may be spirally wound round the assist gas tube 52 so that a twist force given to the power cable 60 can be absorbed.

Further, the multiple core power cable 60 may be divided into respective umbilical members. In this case, it is possible to extend the life of the power cable 60. The life may be further extended when the power cable 60 is formed in such a manner that an aggregation of thin strands are twisted and bundled into conductors and the thus formed conductors are twisted and bundled into a multiple core conductor.

The torch cable 54 capable of supplying a welding current, an assist gas and a welding wire to the welding torch 32 passes through in the hollow portion 96 of the front arm 18 and is drawn out from the wire feeding device 34 toward a forward end portion of the first wrist element 22.

On the other hand, an electric power feeding cable, an assist gas hose, a wire conduit 51 and a wire feeding device motor control cable are connected to the wire feeding device 34. By the electric power feeding cable described above, a welding current sent from the welding power source 44 is supplied to the welding torch 32 through the power cable 60 provided in the torch cable 54.

The assist gas hose supplies assist gas, which is sent from a gas cylinder (not shown), to the welding torch 32 through the assist gas tube 52 provided in the torch cable 54. The wire conduit 51 supplies the welding wire 56, which is sent from the welding wire drum, to the welding torch 32 through the liner 58 provided in the torch cable 54.

The wire feeding device motor control cable has a function of supplying a signal and power for controlling the wire feeding device 34. In this case, a portion of the signal is fed back. The wire feeding device motor control cable is connected to the welding power source 44 for outputting a command to the wire feeding device motor.

An electric power feeding cable, an assist gas hose and a wire feeding device motor control cable which are connected to the wire feeding device 34 are referred to as "a working tool managing unit umbilical member 50", hereinafter. The working tool managing unit umbilical member 50 is drawn into the robot 10 through a connector provided on a distribution board in the base portion 11 of the robot 10.

As shown in Fig. 1b, the working tool managing unit umbilical member 50 passes through in the hollow portion which is concentric with the first axis 1 of the rotary barrel 12 and is drawn out from an upper portion of the rotary barrel 12. Then, the working tool managing unit umbilical member 50 is guided to a lower outside portion of the upper arm 14 and further guided to an upper outside portion of the upper arm 14 along the longitudinal direction of the upper arm 14. Then, the working tool managing unit umbilical member 50 is guided to the front face 18b of the front arm 18.

As shown in Figs. 1a and 2a, on the side face 18a of the front arm 18 arranged on the opposite side to the upper arm 14, the umbilical member junction portion 39 is attached. A portion 50a of the working tool managing unit umbilical member 50, which has been guided onto the front face 18b of the upper arm 18, is connected to the umbilical member junction portion 39, i.e., the wire feeding device motor control cable and assist gas hose are connected to the umbilical member junction portion 39. Then, the assist gas hose is connected to the torch cable 54 through an electromagnetic valve (not shown) of the wire feeding device 34.

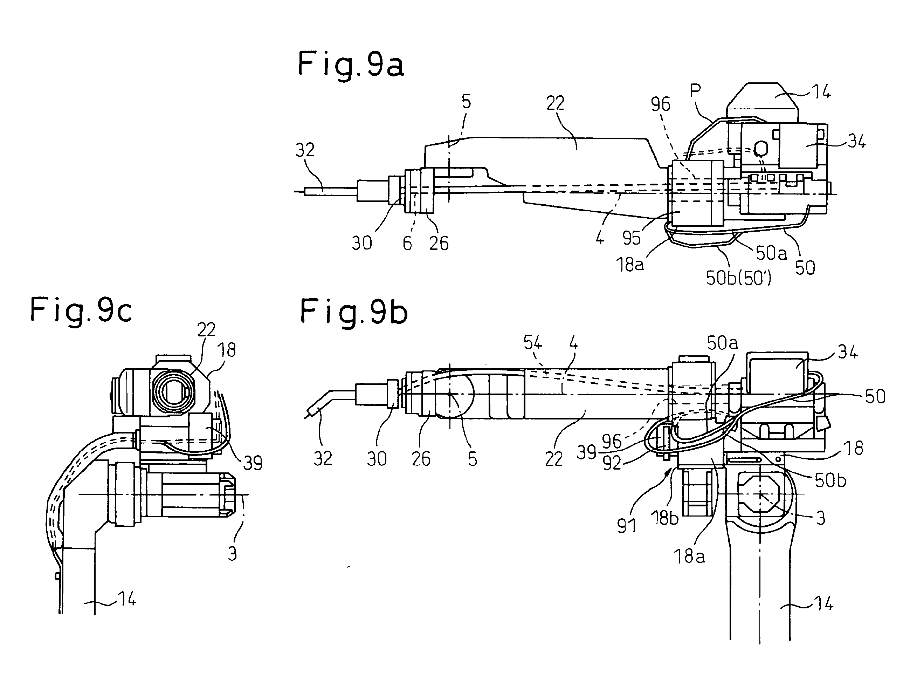

In the embodiment shown in Fig. 9b, etc., the umbilical member junction portion 39 is attached to the front face 18b of the front arm 18. A portion 50a of the working tool managing unit umbilical member 50, which has been guided onto the front face 18b of the upper arm 18, is connected to the umbilical member junction portion 39, i.e., the wire feeding device motor control cable and the assist gas hose are connected to the umbilical member junction portion 39. Then, the assist gas hose is connected to the torch cable 54 through an electromagnetic valve of the wire feeding device 34.

The remaining umbilical member 50b, that is, the power feeding cable is guided to the wire feeding device 34 along a surface of the umbilical member junction portion 39 without being connected to the umbilical member junction portion 39. Then, the power feeding cable is connected to a connecting portion (not shown) of the torch cable 54.

The motor umbilical member 50' for motors (not shown) to drive the upper arm 14 and the front arm 18, etc. of the robot is guided onto the front face 18b of the front arm 18 by the substantially same manner as that of the working tool managing unit umbilical member 50. In the middle of the motor umbilical member 50' which is guided onto the front face 18b of the front arm 18, the motor umbilical member 50' appropriately branches to a motor (not shown) for driving the rotary barrel 12 and a motor (not shown) for driving the upper arm 14.

A motor for driving the front arm 18 and a motor for driving the first wrist element 22 are attached to the front arm 18. A motor for driving the second wrist element 26 and a motor for driving the third wrist element 30 are attached to the first wrist element 22. The motor umbilical member 50' is directly connected to the respective motors without being relayed by the umbilical member junction portion 39.

In Fig. 2a, the umbilical member, which is not relayed by the umbilical member junction portion 39, i.e., the power feeding cable and the motor umbilical member 50' are referred to as an umbilical member 50b.

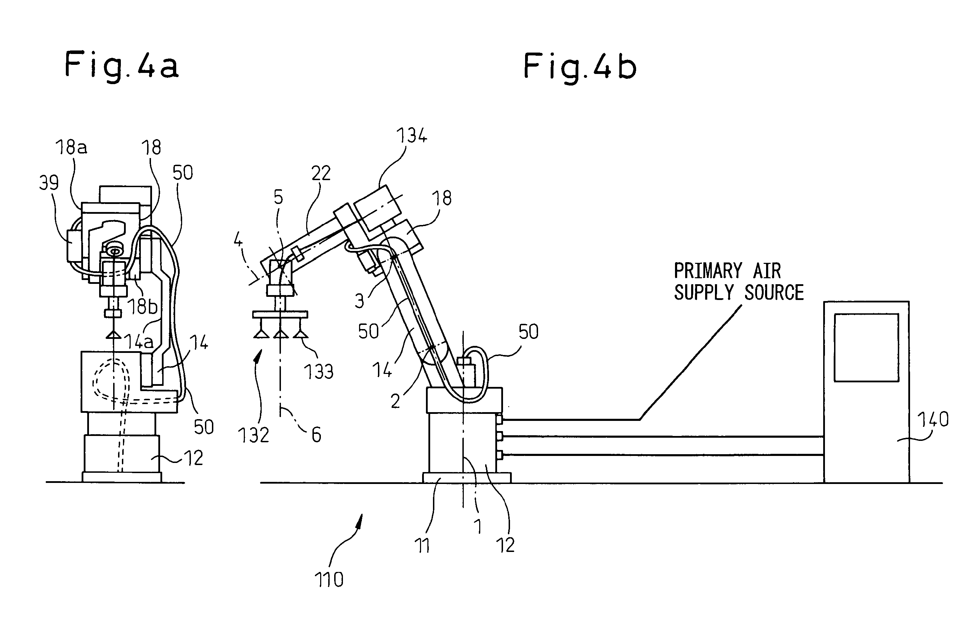

Fig. 4a is a front view showing an overall arrangement of an industrial handling robot having an umbilical member processing mechanism of the present invention. Fig. 4b is a right side view showing an industrial handling robot shown in Fig. 4a. In these drawings, as the working tool managing unit, the electromagnetic valve box 134 is mounted on a rear portion of the front arm 18. As the working tool, the hand 133 is attached.

As shown in these drawings, an air tube extending from a primary air supply source and a signal line are connected to the electromagnetic valve box 134. Between the hand 133 and the electromagnetic valve box 134, an air tube for controlling the hand with the electromagnetic valve and a signal line are connected. The robot control unit 140 controls an electromagnetic valve in the electromagnetic valve box 134 through the signal line. Due to the foregoing, the electromagnetic valve supplies air to the hand 133 according to a signal sent through the signal line. Accordingly, in the case of the industrial robot shown in Figs. 4a and 4b, contents of "the working tool managing unit umbilical member" and "the working tool umbilical member" are a little different from those shown in Figs. 1a and 1b.

As it is known, a suction pad or an air gripper is attached to the hand 133, so that a workpiece, which is an object to be handled, can be sucked or gripped. A signal to confirm a sucking action or a gripping action may be fed back to the robot control unit 140.

As can be seen from Figs. 4a and 4b, even in this case, in the same manner as that described before, the working tool managing unit umbilical member 50 is extended to the electromagnetic valve box 134 through the umbilical member junction portion 39 attached onto the side face 18a of the front arm 18. Even in the case of the industrial handling robot described above, the advantages of the present invention described later can be provided in the same manner.

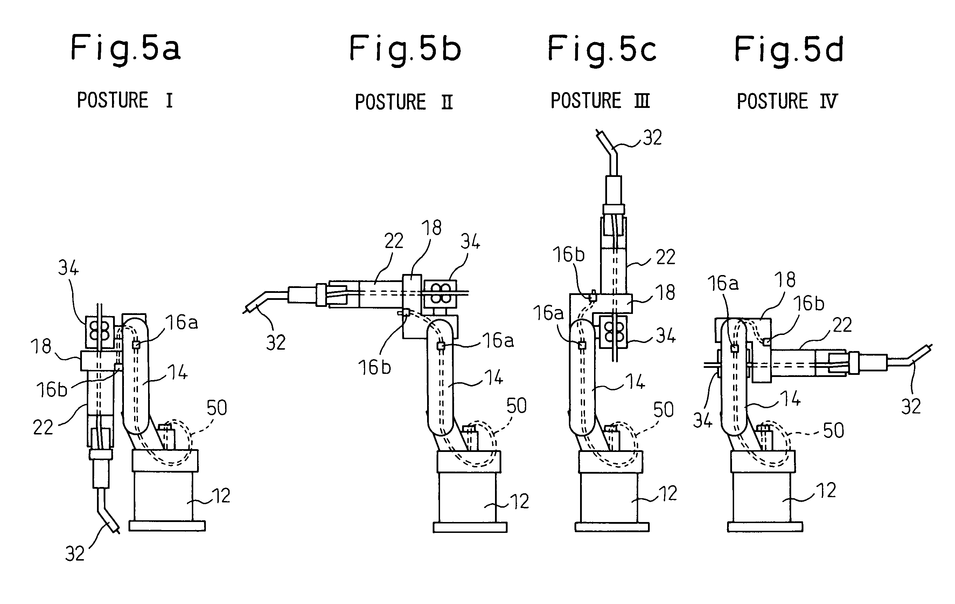

Figs. 5a to 5d are views showing postures I to IV determined according to a plurality of relative angles formed between the front arm and the upper arm in the industrial arc welding robot. As can be seen from these drawings, the working tool managing unit umbilical member 50 is cramped onto an upper portion side face of the upper arm 14 by the fixing member 16a. Further, the working tool managing unit umbilical member 50 is cramped in a portion close to the upper arm attaching face on the front face 18b of the front arm 18 by another fixing member 16b. While a movable portion of the umbilical member 50 between the upper arm 14 and the front arm 18 is being reduced as small as possible, the umbilical member 50 is easily assembled to the upper arm 14 and the front arm 18 by these fixing members 16a, 16b. Due to the foregoing, the front arm 18 can be rotated with respect to the upper arm 14 in a wider range.

The posture II shown in Fig. 5b is an initial state of the robot 10. In the posture II, a relative angle between the front arm 18 and the upper arm 14 is approximately 90°. In this posture II, the working tool managing unit umbilical member 50 has an allowance so that a bend, which is generated by a rotary action of the front arm 18 with respect to the upper arm 14, can be absorbed.

The posture I shown in Fig. 5a is a state in which the front arm 18 of the robot 10 is rotated from the initial state by the angle of -90°. In the posture I, a relative angle between the front arm 18 and the upper arm 14 is approximately 0°. In this case, the working tool managing unit umbilical member 50 is bent and the fixing member 16b of the front arm 18 is moved to the neighborhood of the upper arm 14 as shown in the drawing. However, since the working tool managing unit umbilical member 50 is arranged in the manner described before, even in the posture I, there is no possibility that the working tool managing unit umbilical member 50 or the wire feeding device 34 interferes with the upper arm 14.

In the posture III shown in Fig. 5c, a relative angle between the front arm 18 and the upper arm 14 is approximately 180°. The posture IV shown in Fig. 5d is a state in which the front arm 18 is further rotated from the posture III by the angle of +90°. In the posture III, a relative angle between the front arm 18 and the upper arm 14 is approximately 270°. In the state shown in the posture IV, the wire feeding device 34 provided on the front arm 18 is moved to a position where it overlaps on the upper arm 14. In other words, even in the case where the front arm 18 is located inside the upper arm 14, the working tool managing unit umbilical member 50 or the wire feeding device 34 does not interfere with the upper arm 14.

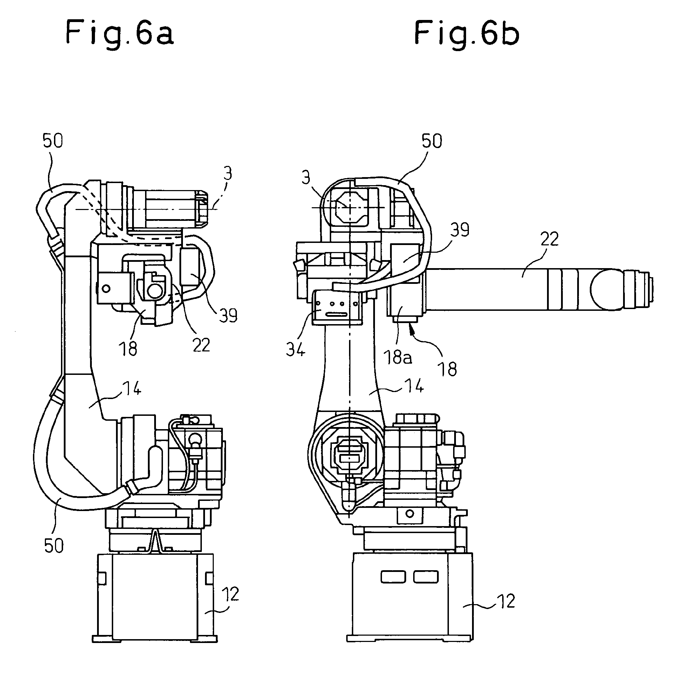

Fig. 6a and Fig. 6b are a front view and a right side view showing a posture IV in detail shown in Fig. 5d, respectively. As described before, the upper arm 14 includes a curved portion 14a curved outside. In the state of the posture IV, the wire feeding device 34 enters inside the curved portion 14a. Due to the above structure, it is possible to prevent the wire feeding device 34 and the upper arm 14 from interfering with each other.

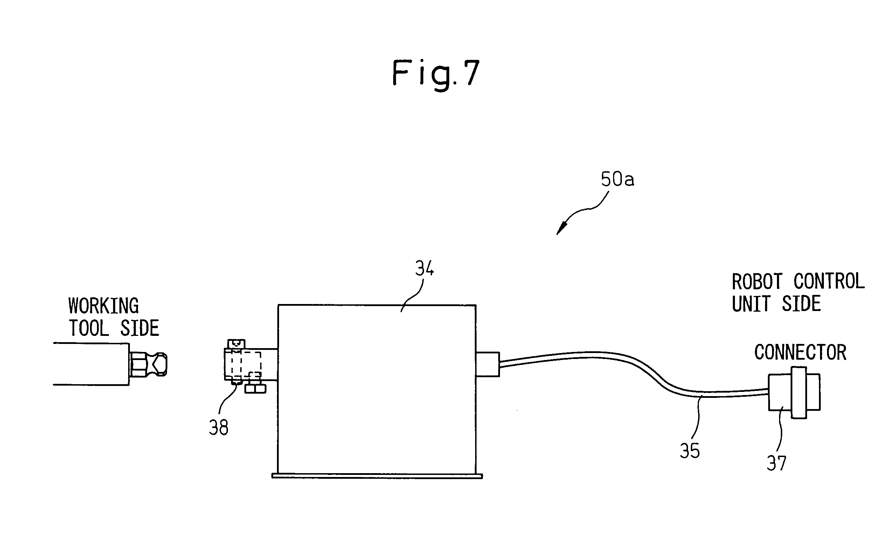

Fig. 7 is an enlarged view showing a working tool managing unit enlarged. As shown in Fig. 7, from one end of the working tool managing unit, for example, from one end of the wire feeding device 34, the short signal line 35 having the connector 37 is extended. The working tool managing unit umbilical member 50 is connected to the connector 37 of the wire feeding device 34, passing through the umbilical member junction portion 39 or without passing through the umbilical member junction portion 39. At the other end of the wire feeding device 34, a rigid connector 38 is arranged. This connector 38 is connected to an umbilical member extending toward the working tool such as a welding torch 32.

As described before, even in the state of posture IV, the working tool managing unit umbilical member 50 does not interfere with the upper arm 14. Accordingly, even in the state of posture IV, the working tool managing unit umbilical member 50 can be easily detached from the connector 37 of the wire feeding device 34 and replaced.

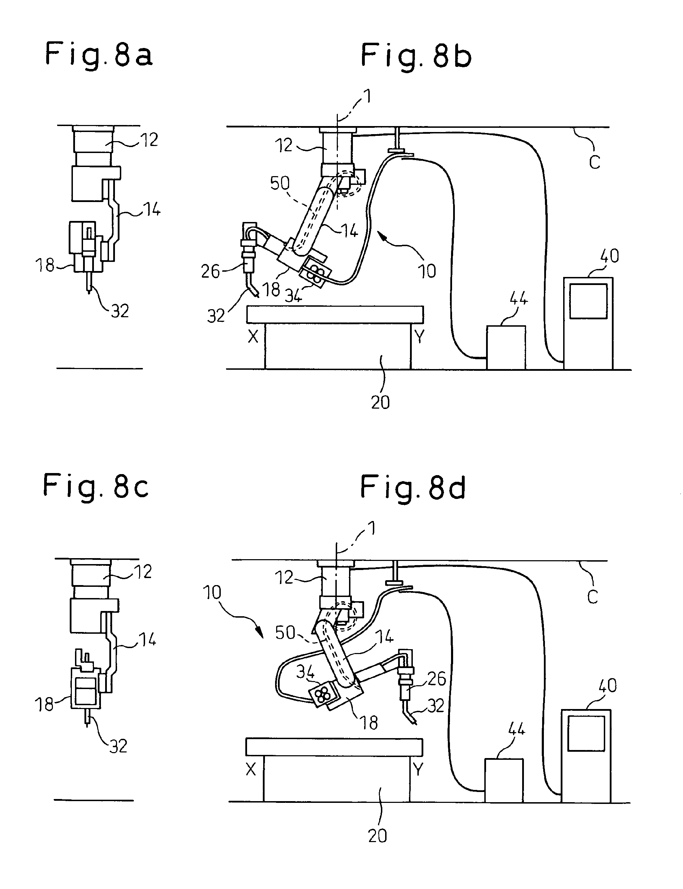

Fig. 8a and Fig. 8c are front views showing an overall arrangement of an industrial arc welding robot which is hung from a ceiling. Fig. 8b and Fig. 8d are right side views of the arc welding robot shown in Fig. 8a and Fig. 8c, respectively. In these drawings, the robot 10 is hung from the ceiling C. In Figs. 8a and 8b, the second wrist element 26 of the robot 10 is rotated from the state of posture II shown in Fig. 5b by an angle of about 90°.

On the other hand, in the robot 10 shown in Fig. 8c and 8d, a position of the front arm 18 with respect to the upper arm 14 is rotated from the state shown in Figs. 8a and 8b by the angle of about 180°. In other words, the upper arm 14 is rotated to a symmetrical position with respect to the first axis 1 and the front arm 18 is rotated to a symmetrical position with respect to the upper arm 14.

As described above, when the upper arm 14, the front arm 18 and the second wrist element 26 are used, the robot 10 can move the welding torch 32 between the case shown in Fig. 8b and the case shown in Fig. 8d. Further, when controlling by the 6 axes of the robot 10, the welding torch 32 can be moved from one end X of the workpiece 20 arranged on the floor to the other end Y. In other words, only by the robot 10 of the present invention, a predetermined operation can be executed for a relatively large workpiece 20 arranged on the floor.

Referring to Fig. 2b again, the recess portion 91 is formed on the front face 18b of the front arm 18.

The working tool managing unit umbilical member 50, which extends from the upper arm 14 to the front face 18b of the front arm 18, is guided into the recess portion 91. In other words, since the working tool managing unit umbilical member 50 is located in the recess portion 91, even in the case where the front face 18b of the front arm 18 approaches a working position, the working tool managing unit umbilical member 50 does not interfere with a peripheral device. In this case, it is preferable that the working tool managing unit umbilical member 50 is partially gripped in the recess portion 91.

In Fig. 9b, in the same manner as that of Fig. 2b, the recess portion 91 is formed in a lower portion of the front face 18b of the front arm 18. The recess portion 91 shown in Fig. 9b is formed into an L-shape in the lowermost portion of the front arm 18. Even in this case, the same advantage as those of the case shown in Fig. 2b can be provided.

Further, as shown in Fig. 2b, the recess portion 91 may be closed with a cover portion 92. Due to the foregoing, the occurrence of interference with the peripheral device can be further prevented. In the case where the working tool is a welding torch 32, the cover portion 92 can protect the working tool managing unit umbilical member 50 from the welding metal which is scattered.

In Fig. 9b, the recess portion 91 is closed with the cover portion 92 in the same manner as that of Fig. 2b. However, a portion of the working tool managing unit umbilical member 50 passes through above the cover portion 92.

The umbilical member described above is, for example, a power feeding cable included in the working tool managing unit umbilical member 50. A diameter of this power feeding cable is relatively large. Accordingly, when this power feeding cable is used over a long period of time, a life of the movable portion of the cable is reduced. Accordingly, it is preferable that this power feeding cable is made to pass through outside the cover portion 92 and replaced periodically. In this case, it is difficult to prevent the power feeding cable from interfering with the peripheral device. However, even if the power feeding cable interferes with the peripheral device, since a diameter of the power feeding cable is relatively large, the power feeding cable itself has some tolerance, and results in no problems.

In this connection, as described before, it is not necessary that the umbilical member 50' for a motor be relayed by the umbilical member junction portion 39. Accordingly, the umbilical member 50' for a motor may be made to pass through along an upper arm attaching face of the front arm 18 and connected to the motors located in the front arm 18 and the first wrist element 22 as shown by the route P in Fig. 2a. However, the umbilical member 50' for a motor may be made to pass through the recess portion 91 and closed with the cover portion 92.

As described above, in the present invention, the working tool managing unit umbilical member 50 is guided along the front face 18b of the front arm 18 to the side face 18a opposite to the upper arm attaching face. Therefore, even in the posture in which the rear portion of the front arm 18 including the wire feeding device 34 passes through inside the upper arm 14, the working tool managing unit umbilical member 50 and/or the wire feeding device 34 can be prevented from interfering with the upper arm 14. Since the robot of the present invention is composed as described above, an action range of the front arm 18 can be expanded. Accordingly, an application range of the robot 10 can be wide.

The present invention has been explained above by referring to typical embodiments. It should be noted that variations, omissions and additions can be made by those skilled in the art without departing from the scope of the present invention.

## Claims

1. A robot including:
a base portion (11);
a rotary barrel (12) attached to the base portion (11) so that the rotary barrel can be rotated round a first axis;
an upper arm (14) attached to the rotary barrel (12) so that the upper arm can be rotated round a second axis perpendicular to the first axis;
a front arm (18) having a hollow portion and attached to a forward end portion of the upper arm (14) so that the front arm can be rotated round a third axis parallel with the second axis;
a first wrist element (22) attached to a forward end portion of the front arm (18) so that the first wrist element can be rotated round a fourth axis perpendicular to the third axis;
a working tool (32, 133) arranged in the front of the first wrist element (22); and
a working tool managing unit (34, 134) arranged in a rear portion of the front arm (18), wherein
a first umbilical member (54) for supplying at least one of the electric power, the signal and the material to the working tool (32, 133) is extended from the working tool managing unit (34, 134) to the working tool (32, 133) through the hollow portion of the front arm; **characterized in that**
a second umbilical member (50) for supplying at least one of the electric power, the signal and the material to the working tool managing unit (34, 134) is guided in the longitudinal direction of the upper arm (14) from the rotary barrel (12) on a side face of the upper arm (14) located on the opposite side to the side face attached to the rotary barrel (12) and then guided on a front face of the front arm (18) and next connected to the working tool managing unit (34, 134) after it has passed through a side face of the front arm (18) located on the opposite side to the side face on which the upper arm (14) is attached, and
the second umbilical member (50) is connected to the working tool managing unit (34, 134) being relayed by an umbilical member junction portion (39) attached to the side or the front face of the front arm (18).

2. A robot according to claim 1,
wherein a second wrist element (26) arranged so that the second wrist element (26) can be rotated round a fifth axis perpendicular to the fourth axis; and a third wrist element arranged so that the third wrist element can be rotated round a sixth axis perpendicular to the fifth axis are located between the first wrist element (22) and the working tool (32, 133),
wherein an umbilical member for a motor for supplying at least one of the electric power and the signal to the motors to drive the front arm (18), the first (22), the second (26) and the third wrist element (30) is extended from the rotary barrel (12) to the front arm (18) along the second umbilical member (50) and directly connected to each of the motors.

3. A robot according to claim 1 or 2, wherein a recess portion (91) is formed on the front face of the front arm (18) and the second umbilical member (50) is guided in the recess portion (91).

4. A robot according to claim 3, further comprising a cover portion (92) for covering the second umbilical member (50) guided in the recess portion (91).

5. A robot according to one of claims 1 to 4, further comprising a fixing means (16a, 16b) for fixing the second umbilical member (50) on each of the upper side face of the upper arm (14) and the front face of the front arm (18).

6. A robot according to one of claims 1 to 5, wherein the upper arm (14) includes a curved portion (14a) which is curved outside between the first attaching portion with respect to the rotary barrel (12) and the second attaching portion with respect to the front arm (18) .
